# EUROPÄISCHE PATENTANMELDUNG

(11) **EP 4 332 458 A1**
(43) Veröffentlichungstag der Anmeldung: **06.03.2024**
(21) Anmeldenummer: 22193571.1
(22) Anmeldetag: 01.09.2022
(51) Int. Cl.: F24S 20/20

(54) **KONZENTRATOR FÜR HELIOSTATEN**

(71) Anmelder: Covestro Deutschland AG, 51373 Leverkusen (DE)
(72) Erfinder: Mies, Detlef, 50189 Elsdorf (DE); Frizen, Nicolas, 51469 Bergisch Gladbach (DE); Mayer, Thomas, 51381 Leverkusen (DE); Frick-Delaittre, Elena, 50679 Köln (DE); Yesildag, Nafi, 51371 Leverkusen (DE); Wroblewski, Benno, 51379 Leverkusen (DE)
(74) Vertreter: Levpat

(57) **Zusammenfassung**

Die vorliegende Erfindung betrifft einen Polyurethanschaumstoff umfassenden Konzentrator für Heliostaten, die in Solarturmkraftwerken eingesetzt werden, ein Verfahren zur Herstellung des Konzentrators sowie eine Verwendung eines Polyurethanschaumstoffs in dem Konzentrator.

## Beschreibung

Die vorliegende Erfindung betrifft einen Konzentrator für Heliostaten, die in Solarturmkraftwerken eingesetzt werden, und ein Verfahren zu seiner Herstellung.

Solarturmkraftwerke sind aufgrund ihrer hohen Effizienz und ihrer Fähigkeit, Energie für die Stromerzeugung über Nacht zu speichern, eine vielversprechende Technologie für die regenerative Energieerzeugung. Um jedoch große Anteile der Energieversorgung erschließen zu können, ist eine weitere Steigerung der Energieeffizienz sowie eine Senkung der Investitions- und Betriebskosten notwendig.

Bei Solarturmkraftwerken ist eine Vielzahl von Heliostaten um einen Turm, der einen Receiver trägt, herum angeordnet. Die Spiegelflächen dieser Heliostaten sind leicht gekrümmt und haben Brennweiten von bis zu mehreren hundert Metern. Über verschiedene Nachführmechanismen werden die Spiegelflächen der Heliostaten so gesteuert, dass sie abhängig von Tages- und Jahreszeit die einfallende Solarstrahlung auf den am oberen Ende des Turms angeordneten Receiver umlenken und fokussieren.

Ein Konzentrator eines Heliostaten besteht aus einem Reflektor und einer versteifenden sowie formgebenden Konstruktion, in der Regel einer Metallstruktur. Nach gegenwärtig marktüblichem Stand der Technik handelt es sich um eine spiegelbeschichtete Glasscheibe mit einer Dicke von ca. 4 mm als Reflektor, welche punktuell auf eine Metallkonstruktion verklebt wird. Das Einstellen der erforderlichen Wölbung erfolgt mit der Verklebung manuell an der Baustelle und ist ein händischer Prozess (keine Automatisierung).

Heliostate stellen mit einem Anteil von 30 - 40% der Investitionskosten eines Solarturmkraftwerks den größten Kostenfaktor dar, wovon wiederum ca. 40% auf den Konzentrator (Reflektor mit Tragstruktur) entfallen.

DE 102017113738 offenbart eine Facette für einen Heliostaten in einem Solarturmkraftwerk, die als Sandwich-Struktur ausgebildet ist und auf ihrer Rückseite eine Vielzahl von Stegen aufweist, die ebenfalls als Sandwich aufgebaut sind, wobei als Kernmaterialien der Sandwichstrukturen jeweils Polyurethan(PUR)-Schaumstoffe vorgeschlagen werden.

Eine technische Optimierung würde die Verwendung von Dünnglas in der verspiegelten Glasscheibe sowie eine flächige Verklebung der verspiegelten Glasscheibe anstelle der punktuellen Verklebung erbringen. Durch die flächige Verklebung kann Dünnglas eingesetzt werden, das heißt Glas mit einer Dicke von weniger als 3,0 mm, z.B. einer Dicke von etwa 1 mm. Solche verspiegelten Glasscheiben besitzen eine höhere Reflektivitat als herkömmliche Glasscheiben mit einer Dicke von etwa 4 mm, wie sie bislang eingesetzt werden. Weil die Verspiegelung dieser Glasscheibe immer auf der Rückseite, d. h. der dem Kern zugewandten Seite der Glasscheibe vorgesehen ist, wird durch das Dünnglas der Weg des Sonnenlichts durch das Glas beispielsweise von 8 mm (zwei mal 4 mm) auf nur noch 2 mm (zwei mal 1 mm) reduziert. Dies führt zu einem Anstieg des Wirkungsgrads um ein bis zwei Prozentpunkte und zu einer Erhöhung der Leistung des Solarkraftwerks bei gleicher Spiegelfläche, was die Wirtschaftlichkeit eines Solarturmkraftwerks weiter verbessert. Schließlich wird durch Verwendung einer dünneren verspiegelten Glasscheibe das Gewicht des Konzentrators deutlich reduziert, was weitere Material- und Kosteneinsparungen, insbesondere im Bereich der den Konzentrator tragenden Strukturen ermöglicht. Darüber hinaus ergibt eine flächige Verklebung eine gleichmäßigere Wölbung und somit eine höhere Reflektionsgüte. Sowohl die Verwendung von Dünnglas wie auch die flächige Verklebung reduzieren den Aufbau von Spannungen im Glas, welche bei der Wölbung der ursprünglich ebenen Glasfläche entstehen.

Verschiedene Entwicklungen beschreiben den Einsatz von Sandwichstrukturen bestehend aus Dünnglas, einem Kern, beispielsweise aus PUR-Schaumstoff, und bei Bedarf die Verwendung einer abschließenden Decklage. Letztendlich konnten sich diese Entwicklungen auf Grund von nicht gelösten technischen Problemen nicht durchsetzen. Zu diesen nicht ausreichend gelösten Problemen zählen eine ungenügend gleichmäßige Oberfläche des Kerns, so dass keine gleichmäßige Wölbung des Reflektors erzielt werden konnte; eine Delamination einerseits des Spiegels, andererseits der unteren Deckschicht vom Kern; weiterhin Geometrieänderungen während des Produktgebrauchs z.B. durch Umwelteinflüsse oder Schwindung, so dass keine ausreichend lange Stabilität der eingestellten Wölbung erreicht werden konnte; schließlich erwies sich die Herstellung großflächiger Sandwichbauteile (Facetten des Konzentrators) mit ausreichender Maßgenauigkeit als nicht realisierbar.

Aufgabe der vorliegenden Erfindung war es daher, wenigstens eines der genannten Probleme des Standes der Technik zu überwinden.

Gelöst wurde die Aufgabe durch einen Konzentrator für einen Heliostat umfassend
- eine verspiegelte Glasscheibe,
- einen homogenen Kern umfassend einen Polyurethanhartschaumstoff mit einer Offenzelligkeit, bestimmt gemäß DIN EN ISO 4590-2016, von höchstens 0,8% bevorzugt von 0,2% bis 0,6%, besonders bevorzugt von 0,4% bis 0,6%, und
- eine Deckschicht,
wobei die verspiegelte Glasscheibe und der homogene Kern jeweils unabhängig voneinander zwei einander gegenüberliegende Hauptoberflächen aufweisen und wenigstens 10% einer ersten Hauptoberfläche der verspiegelten Glasscheibe direkt oder indirekt auf einer ersten Hauptoberfläche des homogenen Kerns aufliegen und die Deckschicht direkt oder indirekt auf einer zweiten Hauptoberfläche des homogenen Kerns aufliegt.

Der Konzentrator für einen Heliostat umfasst also eine verspiegelte Glasscheibe und eine Deckschicht. Weiterhin umfasst der Konzentrator einen homogenen Kern, der einen Polyurethanhartschaumstoff umfasst. Dieser Polyurethanhartschaumstoff weist eine Offenzelligkeit, bestimmt gemäß DIN EN ISO 4590-2016, von höchstens 0,8% bevorzugt von 0,2% bis 0,6%, besonders bevorzugt von 0,4% bis 0,6% auf. Außerdem weisen sowohl die verspiegelte Glasscheibe als auch der homogene Kern jeweils unabhängig voneinander zwei einander gegenüberliegende Hauptoberflächen auf, das heißt die beiden Hauptoberflächen der verspiegelten Glasscheibe liegen einander gegenüber, und die beiden Hauptoberflächen des homogenen Kerns liegen einander gegenüber. Wenigstens 10% einer ersten Hauptoberfläche der verspiegelten Glasscheibe liegen direkt oder indirekt auf einer ersten Hauptoberfläche des homogenen Kerns auf, und die Deckschicht liegt wenigstens teilweise auf einer zweiten Hauptoberfläche des Kerns auf.

Dem Fachmann sind sowohl verspiegelte Glasscheiben als auch geeignete Deckschichten, beispielsweise Metallbleche aus dem Stand der Technik bekannt.

Der homogene Kern kann auch aus dem Polyurethanhartschaumstoff bestehen.

In einer Ausführungsform ist der Polyurethanhartschaumstoff erhältlich oder wird der Polyurethanhartschaumstoff erhalten aus einem Polyurethanreaktionssystem umfassend
A eine Isocyanatzusammensetzung umfassend ein Polyisocyanat, und
B eine gegenüber Isocyanaten reaktive Zusammensetzung mit einer zahlenmittleren durchschnittlichen Funktionalität von höchstens 4,0 bevorzugt von 2,5 bis 3,8, besonders bevorzugt von 3,0 bis 3,2 umfassend
   B1 eine gegenüber Isocyanaten reaktive Verbindung,
   B2 ein Treibmittel,
   B3 einen Katalysator,
   B4 gegebenenfalls Hilfs- und/oder Zusatzmittel.

Im Sinne dieser Anmeldung handelt es sich bei der zahlenmittleren durchschnittlichen Funktionalität um den zahlenmittleren Durchschnitt der theoretischen gegenüber Isocyanaten reaktiven Funktionalitäten der Komponenten in einer gegenüber Isocyanaten reaktiven Zusammensetzung. Besteht also beispielsweise eine gegenüber Isocyanaten reaktive Zusammensetzung aus 50 mol% eines Polyols Blw einer theoretischen Funktionalität 2, 30 mol% eines Polyols Blx einer theoretischen Funktionalität 3, 10 mol% eines Polyols Bly einer theoretischen Funktionalität 4 und 10 mol%, jeweils bezogen auf die Gesamtmenge der gegenüber Isocyanaten reaktiven Zusammensetzung, eines Polyols B1z einer theoretischen Funktionalität 0, so beträgt die zahlenmittlere durchschnittliche Funktionalität (0,5^{∗}2 + 0,3^{∗}3 + 0,1^{∗}4 + 0,1^{∗}0) / 1 = 2,3.

In einer weiteren Ausführungsform umfasst die gegenüber Isocyanaten reaktive Verbindung 20 - 80 Gew.-%, bezogen auf die Gesamtmenge der gegenüber Isocyanaten reaktiven Zusammensetzung, eines Polyols B1a mit einer Funktionalität < 2.

In einer bevorzugten Ausführungsform umfasst die gegenüber Isocyanaten reaktive Verbindung ein Polyol B1a mit einer Funktionalität < 3,5, ein Polyol B1b mit einer Funktionalität von 2,5 - 3,5 und ein Polyol B1c mit einer Funktionalität von 3,6 - 4,5 umfasst.

In einer weiteren bevorzugten Ausführungsform umfasst die gegenüber Isocyanaten reaktive Verbindung 20 - 80 Gew.-%, bezogen auf die Gesamtmenge der gegenüber Isocyanaten reaktiven Zusammensetzung, eines Polyols Bla mit einer Funktionalität < 3,5, ein Polyol Blb mit einer Funktionalität von 2,5 - 3,5 und ein Polyol B1c mit einer Funktionalität von 3,6 - 4,5.

Grundsätzlich sind alle zur Herstellung von Polyurethanen üblichen gegenüber Isocyanaten reaktiven Verbindungen geeignet, beispielsweise Polyetherpolyole, Polyesterpolyole, Polyetheresterpolyole, Polycarbonatpolyole oder Polyethercarbonatpolyole.

Beispielsweise können Polyetherpolyole eingesetzt werden, welche auf an sich bekannte Weise durch Polyaddition von Alkylenoxiden an polyfunktionelle Startersubstanzen in Gegenwart von Katalysatoren hergestellt werden können. Beispielsweise können die Polyetherpolyole aus einer Starterverbindung oder einem Starterverbindungsgemisch mit durchschnittlich 1,5 bis 8,0 aktiven Wasserstoffatomen und einem oder mehreren Alkylenoxiden hergestellt. Bevorzugte Starterverbindungen sind Moleküle mit 2 bis 8, insbesondere 3 bis 8, besonders bevorzugt 3 bis 6, Hydroxylgruppen pro Molekül wie Triethanolamin, Glycerin, Trimethylolpropan, Pentaerythrit, Sorbit und Saccharose. Die Startersubstanzen können allein oder im Gemisch, unter anderem mit difunktionellen Startersubstanzen wie Diethylenglykol, Dipropylenglykol, Triethylenglykol, Tripropylenglykol, 1,4-Butandiol, 1,6-Hexandiol verwendet werden. Bevorzugt verwendete Alkylenoxide sind Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides abwechselnd umzusetzen.

Im Sinne dieser Anmeldung handelt es sich bei einem aktiven Wasserstoffatom um ein Wasserstoffatom einer gegenüber Isocyanaten reaktiven funktionellen Gruppe, also zum Beispiel um ein Wasserstoffatom einer OH-, NH-, CO₂H- oder SH-Gruppe.

Polyesterpolyole können beispielsweise durch Veresterung von Phthalsäureanhydrid, Terephthalsäure, Isophthalsäure, Glutar-, Bernstein-, und/oder Adipinsäure mit Ethylenglykol, Diethylenglykol, Propylenglykol, Butandiol, Hexandiol, Trimethylolpropan, Glycerin und anderen erhalten werden.

Polyesteretherpolyole können beispielsweise durch die für Polyesterpolyole beschriebene Veresterung erhalten werden, wenn es sich bei der Alkoholkomponente um ein zwei- oder mehrwertiges Polyetherpolyol, zum Beispiel eines der oben beschriebenen Polyetherpolyole, handelt. Bevorzugt werden Polyetherpolyole mit Mn = 150 bis 2000 g/mol zur Herstellung der Polyesteretherpolyole eingesetzt.

Polycarbonatpolyole sind beispielsweise durch Umsetzung von Phosgen, Dimethylcarbonat, Diethylcarbonat oder Diphenylcarbonat mit difunktionellen Alkoholen oder Polyesterpolyolen oder Polyetherpolyolen erhältlich. Hierzu verwendete Polyesterpolyole oder Polyetherpolyole können zum Beispiel den oben beschriebenen Polyesterpolyolen beziehungsweise Polyetherpolyolen entsprechen.

Polyethercarbonatpolyole sind beispielsweise aus der Umsetzung einer Startersubstanz, wie sie auch bei der Herstellung der Polyetherpolyole verwendet werden kann, mit Kohlendioxid und einem Alkylenoxid, vorzugsweise Ethylenoxid, Propylenoxid, Butylenoxid oder Mischungen aus wenigstens zwei hieraus, insbesondere bevorzugt in Gegenwart eines Doppelmetallcyanid-Katalysators, erhältlich.

In einer besonders bevorzugten Ausführungsform handelt es sich bei dem Polyol B1a um Rizinusöl.

In einer weiteren bevorzugten Ausführungsform handelt es sich bei dem Polyol B1b um ein Alkohol-gestartetes Polyetherpolyol, oder es handelt sich bei dem Polyol Blc um ein Amin-gestartes Polyetherpolyol, oder es handelt sich bei dem Polyol B1b um ein Alkohol-gestartetes Polyetherpolyol und bei dem Polyol B1c um ein Amin-gestartes Polyetherpolyol.

Mehr bevorzugt handelt es sich bei dem Polyol B1a um Rizinusöl und bei dem Polyol B1b um ein Alkohol-gestartetes Polyetherpolyol, oder es handelt sich bei dem Polyol B1a um Rizinusöl und bei dem Polyol B1c um ein Amin-gestartes Polyetherpolyol, oder es handelt sich bei dem Polyol B1a um Rizinusöl, bei dem Polyol B1b um ein Alkohol-gestartetes Polyetherpolyol und bei dem Polyol B1c um ein Amin-gestartes Polyetherpolyol.

Insbesondere bevorzugt umfasst die gegenüber Isocyanaten reaktive Verbindung 20 - 80 Gew.-% Bla, 1 - 40 Gew.-% B1b und 1 - 40 Gew.-% Blc, jeweils bezogen auf die Gesamtmenge der gegenüber Isocyanaten reaktiven Zusammensetzung.

Bevorzugt ist der Polyurethanhartschaumstoff erhältlich aus einem ein Treibmittel B2 umfassenden Polyurethanreaktionssystem. Besonders bevorzugt umfasst das Treibmittel B2 höchstens 2 Gew.-% bevorzugt von 0,5 Gew.-% bis 1,5 Gew.-% und besonders bevorzugt von 0,8 Gew.-% bis 1,2 Gew.%, bezogen auf die Gesamtmenge der gegenüber Isocyanaten reaktiven Verbindung, physikalische Treibmittel. Noch mehr bevorzugt umfasst das Treibmittel B2 Wasser und höchstens 2 Gew.-%, bezogen auf die Gesamtmenge der gegenüber Isocyanaten reaktiven Verbindung, physikalische Treibmittel. Jeweils eingeschlossen ist der Fall, dass das Treibmittel B2 kein physikalisches Treibmittel enthält. Überraschenderweise wurde gefunden, dass höchstens 2 Gew.-% bevorzugt von 0,5 Gew.-% bis 1,5 Gew.-% und besonders bevorzugt von 0,8 Gew.-% bis 1,2 Gew.-% an physikalischer Treibmittel zu einem geringeren Druck im Werkzeug bei der Herstellung des Konzentrators und zu einer reduzierten Quellung/Verformung des Polyurethanhartschaumstoffs im Klimawechseltest führen.

Geeignete Polyurethanreaktionssysteme zur Herstellung des Polyurethanhartschaumstoffs umfassen eine Isocyanatzusammensetzung umfassend ein Polyisocyanat. Grundsätzlich können die üblichen aliphatischen, cycloaliphatischen, araliphatischen Di- und/oder Polyisocyanate und insbesondere aromatischen Isocyanate zum Einsatz kommen, welche aus der Polyurethanchemie bekannt sind. Beispiele solcher geeigneter Polyisocyanate sind Ethylendiisocyanat, 1,4-Butylendiisocyanat, 1,5-Pentandiisocyanat, 1,6-Hexamethylendiisocyanat (HDI), 1,12-Dodecandiisocyant, Cyclobutan-1,3-diisocyanat, Cyclohexan-1,3- und -1,4-diisocyanat und Mischungen dieser Isomere, Isophorondiisocyanat (IPDI), 2,4- und 2,6- Hexahydrotoluylendiisocyanat und Mischungen dieser Isomere, 2,2,4- und/oder 2,4,4-Trimethylhexamethylendiisocyanat, Bis(4,4'-, 2,4'- und 2,2'-isocyanatocyclo-hexyl)methan oder Mischungen dieser Isomere, und aromatische Isocyanate der allgemeinen Formel R(NCO)z, wobei R ein polyvalenter organischer Rest ist, der einen Aromaten aufweist, und z eine ganze Zahl von mindestens 2 ist. Beispiele hierfür sind 1,3-Diisocyanato-o-xylol, 1,3-Diisocyanato-p-xylol, 1,3-Diisocyanato-m-xylol, 2,4-Diisocyanato-1-chlorobenzol, 2,4-Diisocyanato-1-nitro-benzol, 2,5-Diisocyanato-1-nitrobenzol, m-Phenylendiisocyanat, p-Phenylendiisocyanat, 2,4-Toluylendiisocyanat, 2,6-Toluylendiisocyanat, Mischungen aus 2,4- and 2,6-Toluylendiisocyanat, 2,2'-Methylendi(phenylisocyanat) (MDI), 2,4'-MDI, 4,4'-MDI, sowie deren höhere Homologe und Mischungen daraus, 1,5-Naphthalindiisocyanat, 1-Methoxy-2,4-phenylendiisocyanat, 4,4'-Biphenylendiisocyanat, 3,3'-Dimethyl-4,4'-diphenylmethandiisocyanat, und 3,3'-Dimethyldiphenylmethan-4,4'-diisocyanat; Triisocyanate, wie 4,4',4"-Triphenylmethantriisocyanat und 2,4,6-Toluoltriisocyanat, und Tetraisocyanate, wie 4,4'-Dimethyl-2,2'-5,5'-diphenylmethantetraisocyanat sowie, 1,3- und/oder 1,4-Bis-(2-isocyanato-prop-2-yl)-benzol (TMXDI), 1,3-Bis-(isocyanatomethyl)benzol (XDI).

Neben den vorstehend genannten Isocyanaten können auch modifizierte Isocyanate, wie z.B. solche mit Uretdion-, Isocyanurat-, Carbodiimid-, Uretonimin-, Allophanat- oder Biuretstruktur, eingesetzt werden, sowie modifizierte Isocyanate in Form von Prepolymeren, erhältlich aus der Umsetzung eines, oder mehrerer Polyisocyanate mit einem oder mehreren Polyolen Es ist möglich, dass das Isocyanat ein Präpolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Die Isocyanatzusammensetzung A umfasst bevorzugt zumindest eines von monomerem MDI, oligomerem MDI, polymerem MDI und Mischungen aus wenigstens zwei der vorgenannten.

Der NCO-Gehalt der Isocyanatzusammensetzung A liegt vorzugsweise über 25 Gew.-%, bevorzugt über 30 Gew.-%, besonders bevorzugt über 31,5 Gew.-%. Ihre NCO-Funktionalität liegt vorzugsweise bei 2,1 bis 2,9, ihre Viskosität liegt vorzugsweise bei ≤ 500 mPas (bei 25 °C), gemessen nach DIN 53019-1.

Ganz besonders bevorzugt umfasst das Polyurethanreaktionssystem oder besteht das Polyurethanreaktionssystem aus
A eine Isocyanatzusammensetzung umfassend oder bestehend aus den monomeren Isomeren und höheren Homologen des MDI, und
B eine gegenüber Isocyanaten reaktive Zusammensetzung umfassend oder bestehend aus
   B1a 20 - 80 Gew.-%, bevorzugt 40 - 75 Gew.-%, mehr bevorzugt 50 - 70 Gew.- %, bezogen auf die Gesamtmenge der gegenüber Isocyanaten reaktiven Zusammensetzung, Rizinusöl,
   B1b 1 - 40 Gew.-% , bevorzugt 5 - 30 Gew.-%, mehr bevorzugt 10 - 20 Gew.-%, bezogen auf die Gesamtmenge der gegenüber Isocyanaten reaktiven Zusammensetzung, eines Alkohol-gestarteten Polyetherpolyols mit einer Funktionalität von 2,5 - 3,5, und einer OH-Zahl von 450 - 650 mg KOH/g, bevorzugt 500 - 600 mg KOH/g,
   B1c 1 - 40 Gew.-%, bevorzugt 5 - 30 Gew.-%, mehr bevorzugt 10 - 20 Gew.- %, bezogen auf die Gesamtmenge der gegenüber Isocyanaten reaktiven Zusammensetzung, eines aliphatisches Amin-gestarteten Polyetherpolyols mit einer Funktionalität von 3,6 - 4,5, und einer OH-Zahl von 700 - 900 mg KOH/g, bevorzugt 750 - 850 mg KOH/g,
   B2 ein Treibmittel umfassend oder bestehend aus 0,5 - 6,0 Gew.-%, bevorzugt 1,5 - 5,0 Gew.-%, bezogen auf die Gesamtmenge der gegenüber Isocyanaten reaktiven Zusammensetzung, Wasser und 0 - 2,0 Gew.-%, bevorzugt 0 - 1,5 Gew.-% oder 0,1 - 1,5 Gew.-%, bezogen auf die Gesamtmenge der gegenüber Isocyanaten reaktiven Zusammensetzung, eines physikalischen Treibmittels, bevorzugt eines Kohlenwasserstoffs, mehr bevorzugt eines Kohlenwasserstoffs mit 4 - 6 C-Atomen,
   B3 0,1 - 5,0 Gew.-%, bevorzugt 0,5 - 2,5 Gew.-%, bezogen auf die Gesamtmenge der gegenüber Isocyanaten reaktiven Zusammensetzung, Katalysator umfassend einen oder bestehend aus einem Gelkatalysator, bevorzugt einen/einem tertiären Aminkatalysator als Gelkatalysator, und einen/einem Treibkatalysator, bevorzugt einen/einem tertiären Aminkatalysator als Treibkatalysator,
   B4 0,1 - 10 Gew.-%, bevorzugt 0,5 - 5,0 Gew.-%, bezogen auf die Gesamtmenge der gegenüber Isocyanaten reaktiven Zusammensetzung, Hilfs- und/oder Zusatzmittel umfassend oder bestehend aus Schaumstabilisator, bevorzugt umfassend oder bestehend aus ein/einem oder mehreren Polyetherpolydimethylsiloxancopolymer/en.

In einer weiteren Ausführungsform weist die verspiegelte Glasscheibe eine Dicke von weniger als 3,0 mm, bevorzugt weniger als 2,5 mm, mehr bevorzugt weniger als 2,0 mm, zum Beispiel 0,8 bis 1,8 mm auf.

In einer weiteren Ausführungsform ist die verspiegelte Glasscheibe konkav, d.h. die Wölbung verläuft in Richtung des homogenen Kerns, oder die Deckschicht ist im Wesentlichen eben, oder beides. Im Sinne dieser Anmeldung ist eine Schicht "im Wesentlichen eben", wenn die Schicht, abgesehen von prozessbedingt eventuell vorhandenen Unebenheiten, eben ist.

Der Hauptvorteil des erfindungsgemäßen Konzentrators liegt darin, dass der erfinderische Polyurethanhartschaumstoff - insbesondere der der bevorzugten Ausführungsformen - im ausreagierten Zustand eine im Vergleich zum Stand der Technik geringe Schwindung aufweist, und es ist insbesondere keine signifikante Volumenänderung (Quellung oder Schrumpf) bei Simulation von klimatischen Einflüssen (Klimawechseltest) zu beobachten.

Schließlich erlaubt insbesondere die Ausführungsform, die eine konkave verspiegelte Glasscheibe und eine im Wesentlichen ebene Deckschicht aufweist:
- eine vereinfachte und somit kostengünstige Werkzeugkonstruktion,
- durch die hohe Eigensteifigkeit einen Verzicht auf stabilisierende Bauteile wie Stege unter der Deckschicht,
- eine schnelle und einfache Montage des Konzentrators auf Träger oder - sofern diese bei großen Bauteilen doch beispielsweise aus Stabilitätsgründen benötigt werden - Stege
- die Wahl zwischen einer Herstellung des Konzentrators aus Glasscheibe, Deckschicht und Polyurethanreaktionssystem am Ort des Solarturmkraftwerks oder einer Herstellung abseits des Orts des Solarturmkraftwerks und anschließendem Transport dorthin.

Gegenstand der vorliegenden Erfindung ist weiterhin ein Verfahren zur Herstellung eines erfindungsgemäßen Konzentrators umfassend die Schritte
i. Bereitstellen einer zwei einander gegenüberliegende Hauptoberflächen aufweisenden verspiegelten Glasscheibe, einer Deckschicht und eines Polyurethanreaktionssystems zur Herstellung eines erfindungsgemäßen Polyurethanhartschaumstoffs,
ii. Herstellen eines zwei einander gegenüberliegende Hauptoberflächen aufweisenden homogenen Kerns durch Schäumenlassen des Polyurethanreaktionssystems, um den den Polyurethanhartschaumstoff umfassenden homogenen Kern zu erhalten,
iii. direktes oder indirektes Verbinden einer ersten der beiden Hauptoberflächen der verspiegelten Glasscheibe mit einer ersten der beiden Hauptoberflächen des homogenen Kerns,
iv. direktes oder indirektes Verbinden der Deckschicht mit einer zweiten der beiden Hauptoberflächen des homogenen Kerns.

Es wird also in einem Schritt i. neben der bereits beschriebenen verspiegelten Glasscheibe und der Deckschicht ein Polyurethanreaktionssystem bereitgestellt, das zur Herstellung eines erfindungsgemäßen Polyurethanhartschaumstoffs geeignet ist.

In einem Schritt ii. lässt man das Polyurethanreaktionssystem reagieren, das heißt, man lässt es schäumen, so dass man den Polyurethanhartschaumstoff erhält. Der homogene Kern umfasst diesen Polyurethanhartschaumstoff, kann aber auch aus diesem bestehen.

In einem Schritt iii. wird eine erste der beiden Hauptoberflächen der verspiegelten Glasscheibe mit einer ersten der beiden Hauptoberflächen des homogenen Kerns verbunden. Als Resultat liegen wenigstens 10% der ersten Hauptoberfläche der verspiegelten Glasscheibe direkt oder indirekt verbunden auf dem homogenen Kern auf.

In einem Schritt iv. wird eine erste der beiden Hauptoberflächen der verspiegelten Glasscheibe mit einer ersten der beiden Hauptoberflächen des homogenen Kerns verbunden. Als Resultat liegt die Deckschicht wenigstens teilweise direkt oder indirekt verbunden auf dem homogenen Kern auf.

Im Sinne dieser Anmeldung liegt eine direkte Verbindung zwischen zwei Schichten, zum Beispiel der verspiegelten Glasscheibe und dem homogenen Kern, vor, wenn die beiden Schichten ohne weitere Zwischenschichten miteinander verbunden sind, also direkt aufeinanderliegen. Im Sinne dieser Anmeldung liegt eine indirekte Verbindung zwischen zwei Schichten vor, wenn die beiden Schichten durch wenigstens eine Zwischenschicht, zum Beispiel einen Haftvermittler, miteinander verbunden sind, also nicht direkt aufeinanderliegen. Vom Fall einer direkten Verbindung zwischen zwei Schichten ist im Sinne dieser Anmeldung auch die Situation umfasst, dass ein Teil einer Schicht mit einer zweiten Schicht oder einem Teil einer zweiten Schicht direkt verbunden ist, ein anderer Teil der ersten Schicht aber lediglich indirekt oder nicht mit der zweiten Schicht oder einem Teil der zweiten Schicht verbunden ist.

In einer Ausführungsform des Verfahrens weist die verspiegelte Glasscheibe eine Dicke von weniger als 3,0 mm, bevorzugt weniger als 2,5 mm, mehr bevorzugt weniger als 2,0 mm, zum Beispiel 0,8 bis 1,8 mm auf.

Bevorzugt werden in einem Schritt v. des Verfahrens die Deckschicht und die verspiegelte Glasscheibe so zueinander beabstandet, dass sich ein Spalt zwischen ihnen ausbildet, und danach in Schritt ii. das Polyurethanreaktionssystem so auf die verspiegelte Glasscheibe oder die Deckschicht aufgebracht, dass die Schritte iii. und iv. durch Schritt ii. vollzogen werden. In diesem bevorzugten Verfahren lässt man das Polyurethanreaktionssystem also zwischen der Deckschicht und der verspiegelten Glasscheibe schäumen, so dass sich der homogene Kern durch das Schäumen mit der verspiegelten Glasscheibe und der Deckschicht verbindet.

Die Vorteile des erfindungsgemäßen Verfahrens betreffen diverse Aspekte. So sorgt die chemische Zusammensetzung des Polyurethanreaktionssystems, insbesondere in den bevorzugten Ausführungsformen und speziell in der ganz besonders bevorzugten Ausführungsform, dafür, dass in dem erfindungsgemäßen Verfahren, in dem verspiegelte Glasscheibe und Deckschicht zueinander beabstandet werden, die Treibkraft/Schäumkraft der Reaktion des Polyurethanreaktionssystems ausreichend stark ist, um verspiegelte Glasscheibe und Deckschicht auf die Konturen der diese beiden Bauteile haltenden Werkzeuge zu drücken, so dass zum Beispiel keine zusätzlichen Abstandshalter zwischen verspiegelter Glasscheibe und Deckschicht notwendig sind. Umgekehrt ist die Treibkraft/Schäumkraft der Reaktion des Polyurethanreaktionssystems ausreichend schwach, um keinen unerwünschten Forminnendruck zu erzeugen, so dass die Kraft, mit der die genannten Werkzeuge die verspiegelte Glasscheibe und die Deckschicht halten, und damit die notwendige Energie zum Betreiben der Werkzeuge nicht zu groß wird. Letzterer Vorteil wird insbesondere erzielt, wenn nur geringe Mengen an physikalischem Treibmittel verwendet werden, zum Beispiel weniger als 2,0 Gew.-%, bezogen auf die Gesamtmenge an gegenüber Isocyanaten reaktiver Zusammensetzung.

Weiterhin weist das erfindungsgemäße Polyurethanreaktionssystem durch die Auswahl seiner Bestandteile, insbesondere der gegenüber Isocyanaten reaktiven Zusammensetzung und der Katalysatoren - und hier insbesondere in den bevorzugten Ausführungsformen, speziell in der ganz besonders bevorzugten Ausführungsform - eine relativ hohe Viskosität auf, so dass es, wenn es in Schritt ii. des erfindungsgemäßen Verfahrens auf die verspiegelte Glasscheibe oder die Deckschicht aufgebracht wird, kaum oder nicht von der verspiegelten Glasscheibe oder der Deckschicht ab- und unter diese fließt ("Unterschäumen"), wo es beim Aushärten unerwünschte Schaumstoffteile erzeugen würde. Die Viskosität bleibt für eine ausreichend lange Zeit auf ihrem Startniveau, so dass eine homogene Verteilung des Polyurethanreaktionssystems auf der verspiegelten Glasscheibe oder der Deckschicht gewährleistet ist (Latenz). Setzt die Schäumreaktion ein, vollzieht diese sich relativ schnell, so dass sich der Polyurethanhartschaumstoff relativ schnell und stark vernetzt bildet. Wird das so gebildete Bauteil aus den Werkzeugen entnommen, ist es bereits ausreichend stabil, so dass es selbst bei stehender Lagerung keine relevante Geometrieänderung (Verzug) erfährt und nicht für einen definierten Zeitraum liegend und konturunterstützt gelagert werden muss, was eine erhebliche logistische Vereinfachung (minimaler Lageraufwand) und somit eine relevante Ressourcen- und Kostenersparnis darstellt.

Bevorzugt werden im Schritt v. die Deckschicht und die verspiegelte Glasscheibe jeweils von einem eine Werkzeugtemperatur aufweisenden Werkzeug, das für die Deckschicht und die verspiegelte Glasscheibe das gleiche sein kann, gehalten, um die Deckschicht und die verspiegelte Glasscheibe zueinander zu beabstanden, und beträgt die Werkzeugtemperatur beziehungsweise betragen die Werkzeugtemperaturen während des Schritts ii. höchstens 80 °C, bevorzugt höchstens 60 °C, mehr bevorzugt höchstens 40 °C. Es ist auch möglich die beiden Werkzeuge oder Werkzeugteile, die die verspiegelte Glasscheibe und die Deckschicht halten, auf voneinander unterschiedliche Temperaturen zu heizen. Die chemische Zusammensetzung des Polyurethanreaktionssystems, insbesondere in den bevorzugten Ausführungsformen und speziell in der ganz besonders bevorzugten Ausführungsform ermöglicht es, die Werkzeugtemperatur zur Steuerung der Reaktion so niedrig zu halten, ohne, wie ansonsten üblich, zeitlich unterschiedlich startende Reaktionsherde in der Form zu bilden. Eine möglichst konstante und gleichmäßige Reaktivität im gesamten Reaktionsgemisch ist erforderlich, um einen Bauteilverzug bei dünnen und großflächigen Bauteilen zu vermeiden.

In einer bevorzugten Ausführungsform erfolgt die Regelung der Werkzeugtemperatur(en) über einen Heiz-/Kühlkreislauf. Ein solcher Heiz-/Kühlkreislauf ist, im Unterschied etwa zu einer elektrischen Temperaturregelung, in der Lage, die freiwerdende Reaktionsenergie kurzfristig abzuführen, so dass insbesondere bei kurzen Taktzeiten die Werkzeugtemperatur konstant bleibt und ein stabiler Herstellungsprozess gewährt wird.

Grundsätzlich kann das Polyurethanreaktionssystem mittels verschiedener Eintragstechniken auf die verspiegelte Glasscheibe oder die Deckschicht aufgebracht werden: es ist für die offene, geschlossene oder semi-geschlossene Formfüllweise geeignet. Als besonders geeignet hat sich die offene Eintragsweise im Gießverfahren - robotergeführter Eintrag des Reaktionsgemisches über vorgegebene Bahnen - herausgestellt. Durch die latente Einstellung des Systems und die reduzierte Werkzeugtemperatur ist eine optimierte Vorverteilung über Gießharken nicht erforderlich. Das System verläuft ineinander, ohne sogenannte Fließfronten als potenzielle Fehlerstellen auszubilden.

In einer Ausführungsform wird das Polyurethanreaktionssystem synchron über wenigstens zwei Mischköpfe auf die verspiegelte Glasscheibe oder die Deckschicht aufgebracht. Hierdurch lassen sich Zykluszeiten bei Bedarf verkürzen, bzw. die maximal erzielbare Bauteilgröße erhöhen.

Gegenstand der Erfindung ist schließlich die Verwendung des erfindungsgemäßen Polyurethanhartschaumstoffs als Bestandteil eines homogenen Kerns für einen Konzentrator für einen Heliostat.

Die Erfindung soll in den nachfolgenden Beispielen näher erläutert werden, ohne durch diese in irgendeiner Weise eingeschränkt zu werden.

### Beispiele

### Herstellung der Sandwisch-Verbundelemente

Die Herstellung der Schäume erfolgte in Sandwich-Verbundelementen, bestehend aus einer Metalldeckschicht, einer Glasdeckschicht und dem Polyurethanschaum als verbindendes Element zwischen den Deckschichten. Zur Herstellung der Sandwich-Verbundelemente wurde eine beheizbare Klappdeckelform (Format 300 x 200 x 20 mm) jeweils innen mit einem passend zugeschnittenen Metallblech und einer passend zugeschnittenen Glasschicht ausgekleidet und auf 35°C temperiert. Zur Herstellung des Polyurethanschaums wurde eine Polyolformulierung (B) aus den angegebenen Isocyanat-reaktiven Verbindungen (Bla-e), Treibmittel (B2) Katalysatoren (B3) und Zusatzstoffen (B4) durch Rühren vereinigt und auf 20°C temperiert. Gleichzeitig wurde in einem zweiten Gefäß die Isocyanatkomponente (A) ebenfalls auf 20°C temperiert. Anschließend wurde die erforderliche Menge der Isocyanatkomponente in die Mischung aus Polyolformulierung und Treibmittel gegeben und alles für 6 Sekunden mit einem Pendraulikrührer vermischt. Die Mischung wurde zügig in die temperierte, mit Deckschichten ausgekleidete Klappdeckelform gegeben und geschlossen. Das so entstandene Sandwich-Verbundelement wurde für 20 min in der Form bei gleichbleibender Beheizung belassen. Nach der angegebenen Formstandzeit wurde die Klappdeckelform geöffnet und das Verbundelement vorsichtig aus der Form geholt.

### Verwendete Ausgangstoffe

Polyisocyanat (A): Gemisch aus MDI und PMDI mit einem 4,4'-2-Kern-Anteil von ca. 35 Massen%, einem 2,4'-2-Kern-Anteil von ca. 4 Massen-%, einem 2,2'-2-Kern-Anteil von ca. 0,5 Massen-%, einem 3-Kern-Anteil von ca. 25 Massen-%, sowie mit einem Anteil an höheren Homologen von ca. 35 Massen-%, einem NCO-Wert von ca. 31,5 Massen-% und einer Viskosität von ca. 290 m Pa s bei 20 °C (Desmodur^{®} 44V20L, Covestro Deutschland AG).

### Isocyanat-reaktive Verbindung B1:

Polyol B1a: Rizinusöl mit der Funktionalität f = 3 und OHZ = 164 mg KOH/g
Polyol B1b: Trimethylolpropan-gestarteter Polyether auf Basis von Ethylenoxid mit einer Funktionalität von 3 und einer Hydroxylzahl von 550 mgKOH/g.
Polyol Blc: Ethylendiamin-gestarteter Polyether auf Basis von Propylenoxid mit einer Funktionalität von 4 und einer Hydroxylzahl von 790 mgKOH/g.
Polyol B1d: Sorbit- und Glycerin-gestarteter Polyether auf Basis von Propylenoxid mit einer Funktionalität von 4,6 und einer Hydroxylzahl von 430 mgKOH/g.
Polyol Ble: Glycerin-gestarteter Polyether auf Basis von Propylenoxid mit einer Funktionalität von 3 und einer Hydroxylzahl von 400 mgKOH/g.

### Treibmittel B2:

Wasser
Cyclo/iso-Pentan im Verhältnis 30/70 (w/w)

### Katalysator B3:

Dabco 33LV: 1,4-Diazabicyclooctan
Desmorapid PV: Pentamethyldiethylentriamin
Desmorapid 726B: N,N-Dimethylcyclohexylamin

### Hilfs- und/oder Zusatzmittel B4:

Tegostab B 8491: Schaumstabilisator (Evonik)
Tegostab B 8485: Schaumstabilisator (Evonik)

### Deckschichten:

Spiegel der Dicke 1,2 mm, Hersteller Saint-Gobain, bezogen über Fa. Brio
Blech MAGNELIS, doppelseitig beschichtet mit ZM 310, Dicke 0,8 mm, Hersteller Arcelor Mittal
Blech GRANITE HDX, doppelseitig beschichtet mit Zink und Primer, einseitig farbig lackiert, Dicke 0,65 mm, Hersteller Arcelor Mittal

### Durchgeführte Untersuchunsen an den Sandwich-Verbtindelementen

Bestimmung der Rohdichte des Schaums: Die Rohdichte des Schaums in den Sandwich-Verbundelementen wurde durch Rückwaage und Kenntnis des Volumens des Formteils bestimmt.

Bestimmung der Offenzelligkeit des Schaums: Die Bestimmung der Offenzelligkeit der Schäume wurde nach DIN EN ISO 4590-2016 durchgeführt (Verfahren 2B mit Korrektur).

Klimawechseltest (KWT): Ein Klimawechseltest simuliert die klimatischen Einflüsse auf das Sandwich-Verbundelement bei der Nutzung in der freien Umgebung, z.B. in einer Wüste. Die Verbundelemente wurden 8 Zyklen ausgesetzt. Ein Zyklus dauert 12 Stunden und besteht aus:
1. 40 min Haltezeit bei +23°C und 50% relativer Luftfeuchte
2. 90 min Abkühlzeit von +23°C bis -35°C und 50% relativer Luftfeuchte
3. 60 min Haltezeit bei -35°C und unkontrollierter Luftfeuchte
4. 80 min Aufheizzeit von -35°C bis +50°C und 60% relativer Luftfeuchte
5. 120 min Haltezeit bei +50°C und 60% relativer Luftfeuchte
6. 30 min Aufheizzeit von +50°C bis +80°C und 10% relativer Luftfeuchte
7. 240 min Haltezeit bei +80°C und 10% relativer Luftfeuchte
8. 60 min Abkühlzeit von +80°C bis 23°C und 50% relativer Luftfeuchte.

Zu Beginn des Klimawechseltests und am Ende eines jeden Zyklus werden die Verbundelemente vermessen. Es werden alle drei Kantenlängen gemessen sowie die Formtreue durch Messung der Wölbung durch Sphärometrie jeweils an Spiegel- und Blechseite bestimmt. Der Klimawechseltest wird für jedes Sandwich-Verbundelement in dreifacher Ausführung durchgeführt.

**Tabellarische Auflistung der Beispiele**

| Beispiel | Sandwich-Verbundelement | PU Schaumsystem | Blech Deckschicht | Glas Deckschicht |
|---|---|---|---|---|
| 1 | A | 1 | Magnelis Blech | Glas 1,2 mm |
| 2 | B | 2 | Magnelis Blech | Glas 1,2 mm |
| 3 | C | 1 | Granite Blech | Glas 1,2 mm |
| 4 | D | 2 | Granite Blech | Glas 1,2 mm |
| 5 | CW | 1 | Granite Blech (lackierte Seite innen) | Glas 1,2 mm |
| 6 | DW | 2 | Granite Blech (lackierte Seite innen) | Glas 1,2 mm |

**Zusammensetzung des PU-Schaumsystems 1 für Systeme A, C, CW:**

| **Komponente** | **Gewichtsteile** |
|---|---|
| Polyol B1a | 15,00 |
| Polyol B1d | 53,00 |
| Polyol B1e | 27,00 |
| Wasser | 1,00 |
| Tegostab B 8485 | 2,30 |
| Desmorapid 726B | 1,70 |
| cyclo/iso-Pentan (30/70) | 5,63 |
| Desmodur 22V20L | 116,00 |

**Zusammensetzung des PU-Schaumsystems 2 für Systeme B, D, DW:**

| **Komponente** | **Gewichtsteile** |
|---|---|
| Polyol Bla | 60,18 |
| Polyol B1b | 16,83 |
| Polyol B1c | 16,83 |
| Wasser | 2,80 |
| Tegostab B 8491 | 1,74 |
| Dabco 33LV | 0,96 |
| Desmorapid PV | 0,06 |
| cyclo/iso-Pentan (30/70) | 0,97 |
| Desmodur 22V20L | 140,00 |

**Ergebnisse Bestimmung der Offenzelligkeit**

| **Offenzelligkeit** | **PU Schaumsystem 1** | **PU Schaumsystem 2** |
|---|---|---|
| Prüfkörper 1 [Vol.%] | 5,01 | 0,28 |
| Prüfkörper 2 [Vol.%] | 4,74 | 0,80 |
| Prüfkörper 3 [Vol.%] | 4,25 | 0,52 |
| **Mittelwert [Vol.%]** | **4,67** | **0,53** |

Die Ergebnisse der Offenzelligkeits-Bestimmung beziehen sich auf Schäume mit einer Rohdichte von ca. 80 kg/m³.

### Ergebnisse Klimawechseltest

Der an den Systemen A, C, CW (Schaumsystem 1) und Systemen B, D, DW (Schaumsystem 2) durchgeführte Klimawechseltest zeigt deutlich, dass das Schaumsystem 1 eine stärkere Quellung aufweist als das Schaumsystem 2. System 1 zeigte teilweise Rissbildung. Nur die Sandwich-Verbundelemente mit dem Schaumsystem 2 zeigten kaum Veränderung in der Plattendicke während des Klimawechseltests. Es liegt nahe, dass dies mit der Offenzelligkeit zusammenhängt: System 2 hat eine nahezu 10-fach niedrigere Offenzelligkeit als Schaumsystem 1. Es kann daher weniger Luft und Feuchtigkeit aufnehmen, dadurch ist die Quellung während der unterschiedlichen Klima-Phasen geringer. Die Formbeständigkeit während des Klimawechseltests scheint ausschließlich abhängig zu sein vom Schaumsystem und unabhängig von der Qualität der Deckschichten.

**Tabelle Ergebnisse Klimawechseltest: Bestimmung der Dimensionsveränderungen der Sandwichelemente in Abhängigkeit der Lagerzyklen eines Klimawechseltests durch Sphärometrie am Spiegel und am Blech sowie Dickenmessung**

| **Sphärometrie am Spiegel (mittige Messung) Dimensionsveränderung[mm]** | | | | | | | | | | | | | | | | | | |
|---|---|---|---|---|---|---|---|---|---|---|---|---|---|---|---|---|---|---|
| **Zyklus** | **Spiegel A-1** | **Spiegel A-2** | **Spiegel A-3** | **Spiegel B-1** | **Spiegel B-2** | **Spiegel B-3** | **Spiegel CW-1** | **Spiegel CW-2** | **Spiegel CW-3** | **Spiegel DW-1** | **Spiegel DW-2** | **Spiegel DW-3** | **Spiegel C-1** | **Spiegel C-2** | **Spiegel C-3** | **Spiegel D-1** | **Spiegel D-2** | **Spiegel D-3** |
| 0 | 0,091 | 0,106 | 0,102 | 0,012 | -0,001 | -0,002 | 0,105 | 0,098 | 0,088 | -0,012 | -0,024 | -0,004 | 0,074 | 0,082 | --- | -0,030 | 0,059 | --- |
| 1 | 0,686 | 0,750 | 0,759 | 0,048 | 0,029 | 0,020 | 0,569 | 0,712 | 0,596 | -0,015 | -0,027 | -0,021 | 0,731 | 0,640 | 0,543 | -0,117 | 0,205 | 0,017 |
| 2 | 0,532 | 0,601 | 0,588 | 0,047 | 0,034 | 0,026 | 0,579 | 0,734 | 0,609 | -0,004 | -0,028 | -0,022 | 0,733 | 0,651 | 0,550 | -0,103 | 0,203 | 0,018 |
| 3 | 0,558 | 0,628 | 0,582 | 0,050 | 0,034 | 0,024 | 0,580 | 0,735 | 0,608 | -0,009 | -0,026 | -0,027 | 0,742 | 0,756 | 0,626 | -0,125 | 0,223 | 0,018 |
| 4 | 0,587 | 0,643 | 0,586 | 0,048 | 0,042 | 0,029 | 0,583 | 0,737 | 0,610 | -0,012 | -0,028 | -0,028 | 0,743 | 0,764 | 0,638 | -0,125 | 0,228 | 0,016 |
| 5 | 0,626 | 0,666 | 0,600 | 0,049 | 0,043 | 0,034 | 0,578 | 0,739 | 0,607 | -0,008 | -0,027 | -0,028 | 0,741 | 0,782 | 0,648 | -0,127 | 0,232 | 0,017 |
| 6 | 0,664 | 0,672 | 0,623 | 0,048 | 0,044 | 0,035 | 0,581 | 0,738 | 0,607 | -0,006 | -0,024 | -0,028 | 0,743 | 0,780 | 0,655 | -0,135 | 0,238 | 0,015 |
| 7 | 0,686 | 0,686 | 0,642 | 0,048 | 0,048 | 0,034 | 0,582 | 0,739 | 0,610 | -0,003 | -0,029 | -0,029 | 0,743 | 0,780 | 0,658 | -0,133 | 0,244 | 0,014 |
| 8 | 0,687 | 0,696 | 0,636 | 0,044 | 0,043 | 0,033 | 0,582 | 0,740 | 0,609 | -0,008 | -0,027 | -0,034 | 0,935 | 0,784 | 0,671 | -0,138 | 0,248 | 0,014 |

| Sphärometrie am Blech (mittige Messung) **Dimensionsveränderung[mm]** | | | | | | | | | | | | | | | | | | |
|---|---|---|---|---|---|---|---|---|---|---|---|---|---|---|---|---|---|---|
| **Zyklus** | **Blech A-1** | **Blech A-2** | **Blech A-3** | **Blech B-1** | **Blech B-2** | **Blech B-3** | **Blech CW-1** | **Blech CW-2** | **Blech CW-3** | **Blech DW-1** | **Blech DW-2** | **Blech DW-3** | **Blech C-1** | **Blech C-2** | **Blech C-3** | **Blech D-1** | **Blech D-2** | **Blech D-3** |
| 0 | 0,038 | 0,028 | 0,055 | 0,015 | 0,006 | 0,009 | 0,113 | 0,073 | 0,089 | 0,023 | 0,007 | 0,003 | 0,025 | 0,034 | --- | -0,003 | 0,051 | --- |
| 1 | 0,529 | 0,504 | 0,479 | 0,034 | 0,037 | 0,073 | 0,591 | 0,646 | 0,693 | 0,098 | 0,049 | 0,035 | 0,695 | 0,615 | 0,552 | -0,120 | 0,239 | -0,037 |
| 2 | 0,397 | 0,242 | 0,243 | 0,046 | 0,044 | 0,073 | 0,587 | 0,641 | 0,701 | 0,096 | 0,052 | 0,033 | 0,707 | 0,633 | 0,553 | -0,123 | 0,250 | -0,028 |
| 3 | 0,354 | 0,190 | 0,230 | 0,045 | 0,051 | 0,076 | 0,594 | 0,641 | 0,699 | 0,103 | 0,052 | 0,032 | 0,702 | 0,547 | 0,492 | -0,127 | 0,264 | -0,029 |
| 4 | 0,310 | 0,180 | 0,228 | 0,049 | 0,054 | 0,075 | 0,592 | 0,635 | 0,707 | 0,105 | 0,052 | 0,033 | 0,705 | 0,549 | 0,479 | -0,131 | 0,269 | -0,034 |
| 5 | 0,281 | 0,158 | 0,219 | 0,058 | 0,061 | 0,075 | 0,590 | 0,627 | 0,701 | 0,106 | 0,058 | 0,032 | 0,712 | 0,531 | 0,473 | -0,130 | 0,275 | -0,033 |
| 6 | 0,226 | 0,102 | 0,216 | 0,054 | 0,059 | 0,073 | 0,591 | 0,625 | 0,707 | 0,112 | 0,048 | 0,034 | 0,709 | 0,526 | 0,469 | -0,136 | 0,280 | -0,032 |
| 7 | 0,220 | 0,052 | 0,162 | 0,053 | 0,056 | 0,079 | 0,585 | 0,630 | 0,707 | 0,104 | 0,052 | 0,036 | 0,706 | 0,520 | 0,460 | -0,142 | 0,286 | -0,032 |
| 8 | 0,198 | 0,121 | 0,192 | 0,051 | 0,050 | 0,078 | 0,590 | 0,627 | 0,709 | 0,101 | 0,051 | 0,039 | 0,569 | 0,509 | 0,459 | -0,145 | 0,288 | -0,034 |

| **Dickenmessung mittig (mittige Messung) Dimensionsveränderung [mm]** | | | | | | | | | | | | | | | | | | |
|---|---|---|---|---|---|---|---|---|---|---|---|---|---|---|---|---|---|---|
| **Zyklus** | **Dicke A-1** | **Dicke A-2** | **Dicke A-3** | **Dicke B-1** | **Dicke B-2** | **Dicke B-3** | **Dicke CW-1** | **Dicke CW-2** | **Dicke CW-3** | **Dicke DW-1** | **Dicke DW-2** | **Dicke DW-3** | **Dicke C-1** | **Dicke C-2** | **Dicke C-3** | **Dicke D-1** | **Dicke D-2** | **Dicke D-3** |
| 0 | 20,935 | 20,956 | 21,011 | 20,897 | 21,077 | 20,734 | 20,551 | 21,069 | 20,846 | 21,014 | 21,117 | 20,753 | 20,747 | 20,939 | --- | 22,930 | 20,560 | --- |
| 1 | 23,655 | 23,777 | 23,623 | 20,969 | 21,168 | 20,816 | 22,497 | 23,818 | 23,168 | 21,136 | 21,196 | 20,762 | 23,709 | 23,346 | 23,131 | 22,851 | 21,257 | 20,392 |
| 2 | 23,747 | 23,865 | 23,672 | 20,985 | 21,192 | 20,824 | 22,526 | 23,863 | 23,215 | 21,144 | 21,210 | 20,765 | 23,751 | 23,416 | 23,121 | 22,819 | 21,144 | 20,374 |
| 3 | 23,853 | 23,768 | 23,630 | 20,991 | 21,200 | 20,834 | 22,535 | 23,871 | 23,195 | 21,165 | 21,194 | 20,763 | 23,753 | 23,408 | 23,115 | 22,799 | 21,167 | 20,365 |
| 4 | 23,677 | 23,698 | 23,584 | 20,980 | 21,198 | 20,831 | 22,531 | 23,869 | 23,203 | 21,154 | 21,191 | 20,754 | 23,755 | 23,406 | 23,107 | 22,799 | 21,202 | 20,356 |
| 5 | 23,575 | 23,600 | 23,510 | 20,963 | 21,185 | 20,819 | 22,542 | 23,877 | 23,210 | 21,145 | 21,178 | 20,743 | 23,759 | 23,409 | 23,117 | 22,791 | 21,217 | 20,358 |
| 6 | 23,512 | 23,576 | 23,465 | 20,960 | 21,186 | 20,813 | 22,541 | 23,866 | 23,199 | 21,130 | 21,169 | 20,741 | 23,745 | 23,405 | 23,114 | 22,800 | 21,219 | 20,350 |
| 7 | 23,485 | 23,533 | 23,428 | 20,949 | 21,174 | 20,806 | 22,538 | 23,863 | 23,198 | 21,123 | 21,164 | 20,733 | 23,746 | 23,393 | 23,101 | 22,777 | 21,226 | 20,345 |
| 8 | 23,443 | 23,473 | 23,392 | 20,937 | 21,160 | 20,805 | 22,544 | 23,874 | 23,196 | 21,117 | 21,177 | 20,743 | 23,784 | 23,404 | 23,126 | 22,796 | 21,230 | 20,351 |

## Patentansprüche

1. Konzentrator für einen Heliostat umfassend
- eine verspiegelte Glasscheibe,
- einen homogenen Kern umfassend einen Polyurethanhartschaumstoff mit einer Offenzelligkeit, bestimmt gemäß DIN EN ISO 4590-2016, von höchstens 0,8 %, bevorzugt von 0,2% bis 0,6%, besonders bevorzugt von 0,4% bis 0,6% und
- eine Deckschicht
wobei die verspiegelte Glasscheibe und der homogene Kern jeweils unabhängig voneinander zwei einander gegenüberliegende Hauptoberflächen aufweisen und wenigstens 10% einer ersten Hauptoberfläche der verspiegelten Glasscheibe direkt oder indirekt auf einer ersten Hauptoberfläche des homogenen Kerns aufliegen und die Deckschicht wenigstens teilweise direkt oder indirekt auf einer zweiten Hauptoberfläche des homogenen Kerns aufliegt.

2. Konzentrator gemäß Anspruch 1, wobei der Polyurethanhartschaumstoff erhältlich ist, oder erhalten wird aus einem Polyurethanreaktionssystem umfassend
A eine Isocyanatzusammensetzung umfassend ein Polyisocyanat, und
B eine gegenüber Isocyanaten reaktive Zusammensetzung mit einer zahlenmittleren durchschnittlichen Funktionalität von höchstens 4,0 umfassend
B1 eine gegenüber Isocyanaten reaktive Verbindung,
B2 ein Treibmittel,
B3 einen Katalysator,
B4 gegebenenfalls Hilfs- und/oder Zusatzmittel.

3. Konzentrator gemäß Anspruch 2, wobei die gegenüber Isocyanaten reaktive Verbindung 20 - 80 Gew.-%, bezogen auf die Gesamtmenge der gegenüber Isocyanaten reaktiven Zusammensetzung, eines Polyols B1a mit einer Funktionalität < 2 umfasst.

4. Konzentrator gemäß Anspruch 2, wobei die gegenüber Isocyanaten reaktive Verbindung ein Polyol B1a mit einer Funktionalität < 2, ein Polyol B1b mit einer Funktionalität von 2,5 - 3,5 und ein Polyol B1c mit einer Funktionalität von 3,6 - 4,5 umfasst.

5. Konzentrator gemäß einem der Ansprüche 3 oder 4, wobei es sich bei dem Polyol B1a um Rizinusöl handelt.

6. Konzentrator gemäß Anspruch 4 oder 5, wobei die gegenüber Isocyanaten reaktive Verbindung 20 - 80 Gew.-% Bla, 1 - 40 Gew.-% Blb und 1 - 40 Gew.-% Blc, jeweils bezogen auf die Gesamtmenge der gegenüber Isocyanaten-reaktiven Zusammensetzung, umfasst.

7. Konzentrator gemäß einem der Ansprüche 1 bis 6, wobei das Treibmittel höchstens 2 Gew.- %, bezogen auf die Gesamtmenge der gegenüber Isocyanaten-reaktiven Zusammensetzung, physikalische Treibmittel umfasst.

8. Konzentrator gemäß einem der Ansprüche 1 bis 7, wobei die verspiegelte Glasscheibe eine Dicke von weniger als 3,0 mm, bevorzugt weniger als 2,5 mm, mehr bevorzugt weniger als 2,0 mm aufweist.

9. Konzentrator gemäß einem der Ansprüche 1 bis 8, wobei die verspiegelte Glasscheibe konkav ist und/oder die Deckschicht im Wesentlichen eben ist.

10. Verfahren zur Herstellung eines Konzentrators gemäß einem der Ansprüche 1 bis 9 umfassend die Schritte
i. Bereitstellen einer zwei einander gegenüberliegende Hauptoberflächen aufweisenden verspiegelten Glasscheibe, einer Deckschicht und eines Polyurethanreaktionssystems zur Herstellung eines Polyurethanhartschaumstoffs gemäß einem der Ansprüche 1 bis 9,
ii. Herstellen eines zwei einander gegenüberliegende Hauptoberflächen aufweisenden homogenen Kerns durch Schäumenlassen des Polyurethanreaktionssystems, um den den Polyurethanhartschaumstoff umfassenden homogenen Kern zu erhalten,
iii. direktes oder indirektes Verbinden einer ersten Hauptoberfläche der verspiegelten Glasscheibe mit einer ersten Hauptoberfläche des homogenen Kerns,
iv. direktes oder indirektes Verbinden der Deckschicht mit einer zweiten Hauptoberfläche des homogenen Kerns.

11. Verfahren gemäß Anspruch 10, wobei die verspiegelte Glasscheibe eine Dicke von weniger als 3,0 mm, bevorzugt weniger als 2,5 mm, mehr bevorzugt weniger als 2,0 mm aufweist.

12. Verfahren gemäß einem der Ansprüche 10 oder 11, wobei in einem Schritt v. die Deckschicht und die verspiegelte Glasscheibe so zueinander beabstandet werden, dass sich ein Spalt zwischen ihnen ausbildet, und danach in Schritt ii. das Polyurethanreaktionssystem so auf die verspiegelte Glasscheibe oder die Deckschicht aufgebracht wird, dass die Schritte iii. und iv. durch Schritt ii. vollzogen werden.

13. Verfahren gemäß Anspruch 12, wobei die Deckschicht und die verspiegelte Glasscheibe im Schritt v. jeweils von einem eine Werkzeugtemperatur aufweisenden Werkzeug, das für die Deckschicht und die verspiegelte Glasscheibe das gleiche sein kann, gehalten werden, um die Deckschicht und die verspiegelte Glasscheibe zueinander zu beabstanden, und die Werkzeugtemperatur beziehungsweise die Werkzeugtemperaturen während des Schritts ii. weniger als 80 °C beträgt beziehungsweise betragen.

14. Verwendung eines Polyurethanhartschaumstoffs gemäß einem der Ansprüche 1 bis 9 als Bestandteil eines homogenen Kerns für einen Konzentrator für einen Heliostat.

15. Konzentrator für einen Heliostat umfassend
- eine verspiegelte Glasscheibe,
- einen homogenen Kern umfassend einen Polyurethanhartschaumstoff, und
- eine Deckschicht
wobei die verspiegelte Glasscheibe und der homogene Kern jeweils unabhängig voneinander zwei einander gegenüberliegende Hauptoberflächen aufweisen und wenigstens 10% einer ersten Hauptoberfläche der verspiegelten Glasscheibe direkt oder indirekt auf einer ersten Hauptoberfläche des homogenen Kerns aufliegen und die Deckschicht wenigstens teilweise direkt oder indirekt auf einer zweiten Hauptoberfläche des homogenen Kerns aufliegt, und
wobei der Polyurethanhartschaumstoff erhältlich oder erhalten ist aus einem Polyurethanreaktionssystem umfassend höchstens 2 Gew.-%, bezogen auf die Gesamtmenge des Polyurethanreaktionssystems, physikalisches Treibmittel.
